# Europäisches Patentamt
# European Patent Office
# Office européen des brevets

(19)

(11) Veröffentlichungsnummer: **0 193 876**
**B1**

(12) ## EUROPÄISCHE PATENTSCHRIFT

(45) Veröffentlichungstag der Patentschrift:
18.04.90

(51) Int. Cl.⁴: **B23B 31/26**, B23Q 3/155

(21) Anmeldenummer: **86102566.6**

(22) Anmeldetag: **27.02.86**

(54) Antriebseinheit für rotierende Werkzeuge.

(30) Priorität: **08.03.85 DE 3508231**

(43) Veröffentlichungstag der Anmeldung:
**10.09.86 Patentblatt 86/37**

(45) Bekanntmachung des Hinweises auf die Patenterteilung:
**18.04.90 Patentblatt 90/16**

(84) Benannte Vertragsstaaten:
**CH DE FR GB IT LI**

(56) Entgegenhaltungen:
DE-A- 3 309 922
DE-C- 3 509 635
FR-A- 2 543 866
US-A- 4 051 583

WERKSTATT & BETRIEB, 117. Jahrgang, Nr. 9,
September 1984, Seite 560, München; "Antriebsmittler
für umlaufende Werkzeuge"

(73) Patentinhaber: **Hertel Aktiengesellschaft Werkzeuge + Hartstoffe, Wehlauer Str. 71-73, D-8510 Fürth(DE)**

(72) Erfinder: **Hertel, Günther, Mörikestrasse 24, D-8500 Nürnberg 20(DE)**
Erfinder: **Hertel, Karl Gustav, Kneippstrasse 12, D-8500 Nürnberg 20(DE)**

(74) Vertreter: **Tergau, Enno et al, Patentanwälte Tergau & Pohl Postfach 11 93 47 Hefnersplatz 3, D-8500 Nürnberg 11(DE)**

## Beschreibung

Die Erfindung betrifft eine Antriebseinheit für Rundlaufwerkzeuge mit den im Oberbegriff des Anspruches 1 aufgeführten Merkmalen.

Derartige Antriebseinheiten werden in erster Linie in automatisierten Bearbeitungszentren eingesetzt. Sie sind beispielsweise auf einem Revolverkopf befestigt, durch den die Antriebseinheit in ihre Arbeitsstellung und aus dieser in eine Ladestellung überführt wird. In der Ladestellung des Revolverkopfes werden Werkzeuge ausgewechselt.

Aus FR-A 2 543 866 ist eine Antriebseinheit der eingangs genannten Art bekannt, deren Drehantriebswelle im Gehäuse frei drehbar gelagert ist. Lediglich in der Ladestellung der Antriebseinheit greift eine mit der Spannantriebsvorrichtung kombinierte Blockiereinrichtung antriebsseitig in die Drehantriebswelle ein, um deren Drehbeweglichkeit gegenüber dem Gehäuse der Antriebseinheit zu sperren. Dadurch wird ermöglicht, daß der antriebsseitig angekuppelte Spannantrieb die für die Spannbewegung erforderliche Relativdrehung gegenüber der Drehantriebswelle vollziehen kann. Es ist von Nachteil, daß diese Blockiereinrichtung nur in Ladestellung der Antriebseinheit wirksam ist, jedoch nicht bei der Überführungsbewegung der Antriebseinheit aus ihrer Arbeitsstellung in die Ladestellung und umgekehrt beispielsweise durch Drehung des Revolverkopfes. Dadurch ist es möglich, daß bei diesen Überführungsbewegungen die gespannten Rundlaufwerkzeuge mit ihrer Drehantriebswelle unkontrollierte Drehbewegungen innerhalb des Gehäuses der Antriebseinheit vollziehen, weil die Drehantriebswelle innerhalb der Antriebseinheit frei drehbar ist. Dadurch können Werkzeugbeschädigungen eintreten. Vor allen Dingen ist aber nicht sichergestellt, daß die Werkzeuge nach dem Ladevorgang ihre Relativstellung innerhalb des Gehäuses der Antriebseinheit bis zum Werkzeugwechsel in der nächsten Ladestellung beibehalten. Dadurch kann die Wechselsicherheit in automatisierten Bearbeitungszentren beeinträchtigt werden.

Der Erfindung liegt die Aufgabe zugrunde, eine Antriebseinheit der eingangs genannten Art baulich so zu gestalten, daß sie bei geringem Platzaufwand in einfacher Weise und ohne Beeinträchtigung der Wechselsicherheit die Einleitung der Drehmomente für den Spannantrieb an der Ladestation und für den Drehantrieb an der Arbeitsstation gestattet. Hierbei wird davon ausgegangen, daß bei den bekannten Antriebseinheiten der eingangs genannten Art jeweils eine axial wirksame Spannbewegung unabhängig von der konstruktiven Ausbildung des Spannsystems vorhanden sein muß. Als Beispiel für ein durch Axialverschiebung einer Zugstange angetriebenes Spannsystem wird auf DE-OS 3 309 922 verwiesen. Wohlgemerkt ist der Erfindungsgegenstand jedoch auch für den Einsatz an konstruktiv abweichend ausgebildeten Spannsystemen geeignet.

Die Lösung der Aufgabe erfolgt durch die im kennzeichnenden Teil des Anspruches 1 aufgeführten Merkmale.

Durch das Kennzeichnungsmerkmal des Anspruches 2 ist sichergestellt, daß die Blockiereinrichtung zwischen der Antriebswelle für die Drehantriebsübertragung und dem Gehäuse nur in Arbeitsstellung der Antriebseinheit bzw. des Revolverkopfes aufgehoben, in allen anderen Drehstellungen des Revolverkopfes, in denen der Drehantrieb für das Rundlaufwerkzeug nicht angekuppelt ist, jedoch wirksam ist. Insbesondere ist diese Blockierung selbsttätig dann wirksam, wenn sich die Antriebseinheit in ihrer Ladestellung befindet.

Durch das Kennzeichnungsmerkmal des Anspruches 3 ist die Ankupplungsbewegung des Drehantriebes gleichzeitig die Entkupplungsbewegung für das Kupplungsglied und umgekehrt.

Die Kennzeichnungsmerkmale der Ansprüche 4 bis 8 begünstigen eine besonders raumsparende Bauweise des Spannantriebes.

Die Kennzeichnungsmerkmale der Ansprüche 9 ff. befassen sich mit der konstruktiven Durchbildung einer Antriebseinheit, bei der die Drehachse des Rundlaufwerkzeuges in einem Winkel, insbesondere in einem rechten Winkel zur Drehachse der Einführung der Antriebsdrehmomente für den Dreh- und Spannantrieb steht. Hier bereitet die Winkelübertragung des Spannantriebes auf die Zugstange erhebliche konstruktive Probleme, wenn das Bauvolumen möglichst klein gehalten werden soll.

Der Gegenstand der Erfindung wird an Hand von in den Figuren dargestellten Ausführungsbeispielen näher erläutert. Es zeigen:

Fig. 1 einen Querschnitt durch eine Antriebseinheit mit geradliniger Drehmoment-Durchführung,

Fig. 2 einen Querschnitt analog Fig. 1 durch eine modifizierte Ausführungsform einer Antriebseinheit, bei der die Drehmoment-Durchführung nach Art eines Winkeltriebes vorgenommen wird.

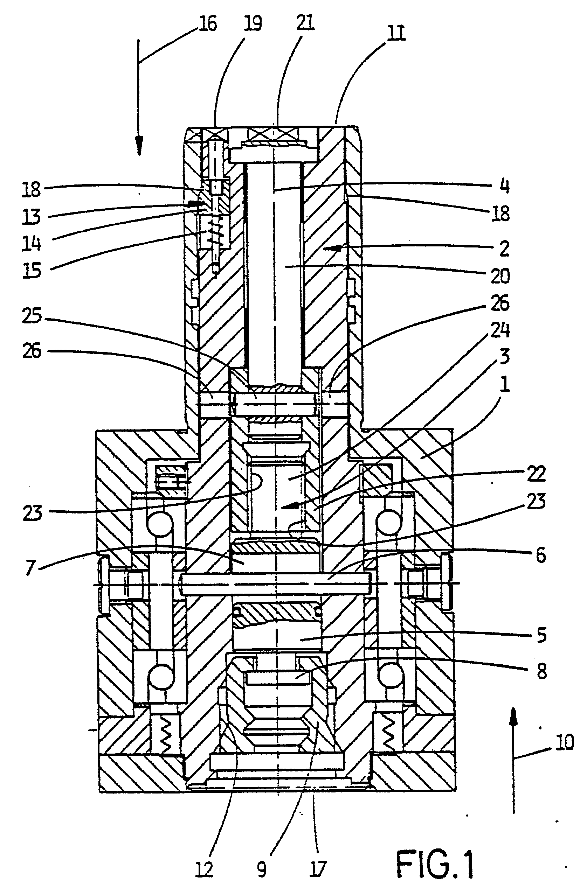

Die Antriebseinheit gemäß Fig. 1 enthält im wesentlichen in einem Gehäuse 1 die Antriebswelle 2 für die Drehantriebsübertragung und die insgesamt mit 3 bezeichnete Spanneinrichtung zur Erzeugung einer in Axialrichtung (Drehachse 4) der Drehantriebswelle 2 erfolgenden, auf das Werkzeug (nicht dargestellt) einwirkenden Spannbewegung. Die Antriebswelle 2 ist eine Hohlwelle, innerhalb derer koaxial eine Zugstange 5 für den Spannantrieb längsverschiebbar und relativ zur als Hohlwelle ausgebildeten Antriebswelle 2 undrehbar gelagert ist. Zur Gewährleistung der Undrehbarkeit ist der den Hohlraum zur Aufnahme der Zugstange 5 umschließende Teil der Antriebswelle 2 in Radialrichtung von einem Stift 6 durchsetzt, der durch eine Durchgangs-Längsnut 7 in der Zugstange 5 - deren relative Drehbarkeit verhindernd - hindurchreicht. Die Zugstange 5 greift mit ihrem Kopf 8 in eine Spannzange 9, die zum radialen Spannen eines nicht dargestellten Werkzeugkopfes in Axialrichtung 10 zur Rückseite 11 der Antriebseinheit hin gezogen wird. Die Funktionsweise der Spannzange 9 im Zusammenwirken mit der teilweise konischen Ausbildung der Innenwand 12 des die Spannzange 9 umgebenden Bereiches der als Hohlwelle ausgebildeten Antriebswelle 2 ist prinzipiell in DE-OS 33 09 922 beschrieben und braucht daher hier nicht näher erläutert zu werden.

Im Bereich der Rückseite 11 ist zwischen Drehantriebswele 2 und Gehäuse 1 eine Blockiereinrichtung 13 angeordnet, die nur in Eingriffstellung (nicht dargestellt) des Drehantriebes eine Relativbewegung zwischen Drehantriebswelle 2 und Gehäuse 1 ermöglicht. Die Blockiereinrichtung 13 ist in Fig. 1 in Blockierstellung dargestellt. Sie enthält ein auf dem Umfang der Drehantriebswelle 2 nur axial verschiebbares Kupplungsglied 14, welches unter Belastung einer Druckfeder 15 in Eingriff mit dem Gehäuse 1 steht bzw. in den Eingriff selbsttätig zurückgeführt wird und erst durch den Eingriff des Drehantriebes an der Drehantriebswelle 2 in Pfeilrichtung 16 zur Vorderseite 17 der Antriebseinheit hin aus der Eingriffsstellung mit dem Gehäuse 1 herausgeschoben wird. Der Blockierkontakt zwischen Kupplungsglied 14 und Gehäuse 1 erfolgt im Bereich des Ringkonus 18, der an die Innenseite des Gehäuses 1 angeformt ist.

Die Drehmomentübertragung von einem nicht dargestellten Drehantrieb auf die Drehantriebswelle 2 der Antriebseinheit erfolgt von der Rückseite 11 her beispielsweise über eine gegen deren rückseitige Stirnseite 19 in Pfeilrichtung 16 vorgeschobene Klauenkupplung od.dgl. Die Entkupplungsbewegung des Kupplungsgliedes 14 und die Ankupplungsbewegung des Drehantriebes an die Drehantriebswelle 2 sind also gleichgerichtet.

Die axiale Spann- und Lösebewegung der Spanneinrichtung 3 bzw. Zugstange 5 erfolgen durch rotatorischen Antrieb der Spannantriebswelle 20. Die Spannantriebswelle 20 ist im rückwärtigen Bereich der Antriebseinheit innerhalb der Drehantriebswelle 2 koaxial zu dieser drehbar gelagert. Die Einführung des Drehantriebes erfolgt ebenfalls von der Rückseite 11 der Antriebseinheit her durch Ankupplung eines nicht dargestellten Drehantriebes an das stirnseitige Ende 21 der Spannantriebswelle 20. Die Spannantriebswelle 20 ist mit einer ebenfalls koaxial zu ihr innerhalb der Drehantriebswelle 2 angeordneten Gewindehülse 22 fest verbunden. Die Gewindehülse 22 ist mit ihrem Innengewinde 23 auf ein auf das rückwärtige Ende der Zugstange 5 aufgebrachtes Außengewinde 23 aufgeschraubt und bildet gemeinsam mit dem Außengewinde 23 ein Schraubgetriebe. Das Schraubgewinde zwischen Gewindehülse 22 und Zugstange 5 weist eine Selbsthemmung auf. Die Gewindehülse 22 steht mit ihrem der Vorderseite 17 bzw. Werkzeugseite abgewandten, auf der Innenseite nicht mit einem Innengewinde versehenen Ende über das rückseitige Ende der Zugstange 24 in Richtung auf die Rückseite 11 hinaus und ist mit diesem Ende auf die Spannantriebswelle 20 fest aufgesetzt und radial verstiftet (Stift 25). Zur Herstellung dieser Verstiftung ist in die Hohlwelle 2 eine radiale Durchtrittsbohrung 26 eingebracht.

Die Funktion dieser Antriebseinheit wird wie folgt beschrieben: An einer Spann- bzw. Ladestation steht die Drehantriebswelle 2 außer Kontakt mit einem Drehantrieb. Die Blockiereinrichtung 13 blockiert folglich jegliche Relativdrehung der Drehantriebswelle 2 innerhalb des Gehäuses 1. In dieser Stellung greift ein Drehantrieb an dem stirnseitigen Ende 21 der Spannantriebswelle 20 an, durch welchen die Gewindehülse 22 je nach Drehrichtung die Zugstange 5 zum Öffnen und Schließen der Spannzange 9 in Richtung auf die Vorderseite 17 oder die Rückseite 11 der Antriebseinheit verschiebt. Die Zugstange 5 ist durch den mit der Drehantriebswelle 2 fest verstifteten Stift 6 permanent an einer Relativdrehung gegenüber der Drehantriebswelle 2 gehindert.

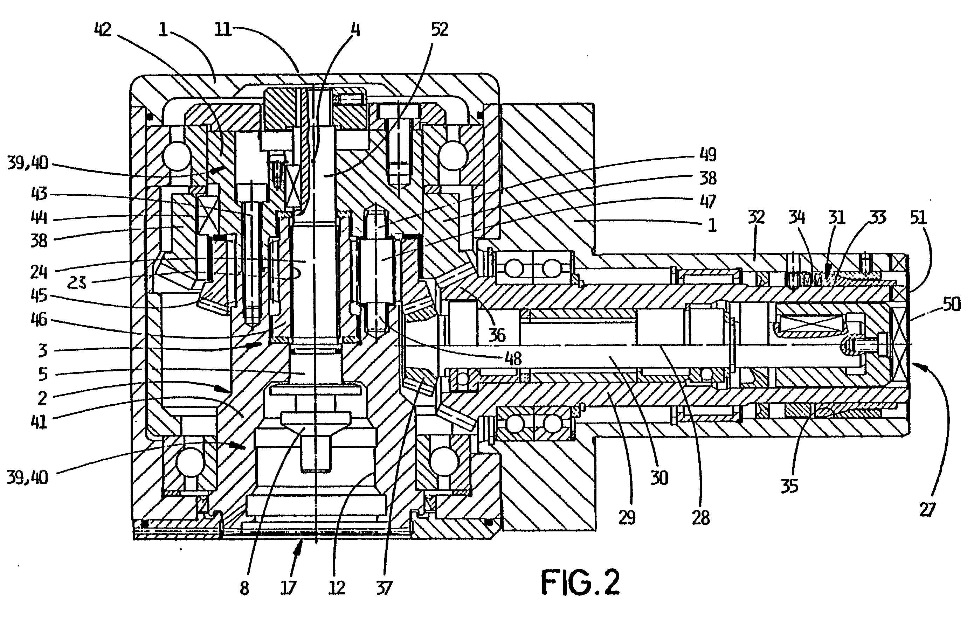

Bei der Ausführungsform gemäß Fig. 2 sind der Dreh- und Spannantrieb ebenfalls rotatorische Antriebe, die jedoch nicht von der Rückseite 11 der Antriebseinheit, sondern von der Seite 27 her eingeführt sind. Die Drehachse 28 der Antriebseinführungsseite steht in einem rechten Winkel zur Drehachse 4 der Werkzeug- bzw. Vorderseite 17. Der Dreh- und Spannantrieb wird von der Antriebseinführungsseite jeweils über ein Kegelradgetriebe zur DrehantriebsAbführungsseite übertragen. Zur Einführung des Drehantriebes von der Seite 27 her dient die innerhalb des Gehäuses 1 drehbar gelagerte Einführungshohlwelle 29 und zur Einführung des Spannantriebes die innerhalb der Einführungshohlwelle 29 gegenüber dieser drehbar gelagerte Spannantriebs-Einführungswelle 30. Eine der Blockiereinrichtung 13 entsprechend funktionell wirksame Blockiereinrichtung 31 ist zwischen der Einführungshohlwelle 29 und dem Gehäuse 1 bzw. dem in Richtung auf die Seite 27 vorstehenden Gehäusetubus 32 wirksam. Die Blockiereinrichtung 31 enthält in Übereinstimmung mit der Blockiereinrichtung 13 ein Kupplungsglied 33, welches undrehbar, jedoch axial gegen den Druck der Feder 34 verschiebbar auf dem Außenumfang der Einführungshohlwelle 29 gelagert ist. Das Kupplungsglied 33 wirkt mit dem Innenkonusring 35 zusammen, welcher mit der Innenwand des Gehäusetubus 32 fest verbunden ist.

Die Einführungshohlwelle 29 und die Spannantriebs-Einführungswelle 30 tragen an ihrem der Seite 27 abgewandten Ende jeweils ein Kegelrad 36 bzw. 37. Das Kegelrad 36 der Einführungshohlwelle 29 kämmt mit dem um die Drehachse 4 rotierenden Kegelrad 38, welches undrehbar auf die Drehantriebswelle 39 aufgesetzt ist, die wiederum als Hohlwelle 40 ausgebildet ist. Die Kegelräder 36,38 bilden gemeinsam ein Kegelradgetriebe. Die Hohlwelle 40 besteht aus dem Hohlwellen-Vorderteil 41 und dem Hohlwellen-Rückteil 42, die beide in Axialrichtung (Drehachse 4) durch Verbindungsschrauben 43 zu einer Einheit fest miteinander verspannt sind. Die feste Verbindung zwischen Kegelrad 38 und Hohlwellen-Rückteil 42 erfolgt durch eine Keilnutverbindung 44.

Innerhalb des Kegelrades 38 für die Drehantriebsübertragung ist das Kegelrad 45 für die Spannantriebsübertragung koaxial zur Drehachse 4 drehbar gelagert. Das Kegelrad 45 kämmt mit dem Kegelrad 37 der Einführungshohlwelle 29 und bildet mit ihr gemeinsam ein Kegelradgetriebe. Das Kegelrad 45 ist das Hohlrad eines Planetengetriebes. Die auf das rückseitige Ende 24 der Zugstange aufgeschraubte Gewindehülse 46 ist das Sonnenrad dieses Planetengetriebes, dessen Hohlrad durch das Kegelrad 45 gebildet ist. Die Planetenräder 47 sind gleichmäßig verteilt um die Gewindehülse 46 herum angeordnet und mit ihren beidendig vorgesehenen Achsstummeln 48 bzw. 49 einerseits im Hohlwellen-Vorderteil 41 und andererseits im Hohlwellen-Rückteil 42 gelagert.

Bei der Ausführungsform gemäß Fig. 2 ist das rückseitige Ende 24 der Zugstange 5 in Richtung auf die Rückseite 11 verlängert (Verlängerung 52). Im Bereich der Verlängerung 52 ist die Zugstange 5 über die Keilnutverbindung innerhalb der Drehantriebshohlwelle 40 undrehbar, jedoch ihr gegenüber relativ verschiebbar gelagert. Die Lagerung der Gewindehülse 46 erfolgt in Axialrichtung unverschiebbar zwischen dem Hohlwellen-Vorderteil 41 und dem Hohlwellen-Rückteil 42.

Die Funktionsweise der Antriebseinheit gemäß Fig. 2 ist folgende: Bei dem Werkzeugwechsel ist die Einführungshohlwelle 29 durch die Blockiereinrichtung 31 gegenüber dem Gehäuse 1 blockiert. Der Spannantrieb greift am stirnseitigen Ende 50 der Spannantriebs-Einführungswelle 30 an. Deren Rotationsbewegung wird über das Kegelradgetriebe 37,45 auf die Gewindehülse 46 übertragen. Die Gewindehülse 46 ist dabei genauso auf das rückseitige Ende 24 der Zugstange 5 aufgeschraubt wie bei dem Ausführungsbeispiel gemäß Fig. 1. Indessen bilden die Gewindehülse 46 das Sonnenrad und das Kegelrad 45 das Hohlrad eines Planetengetriebes, deren Planetenräder 47 in der Drehantriebs-Hohlwelle 40 drehbar gelagert sind. Bei der Übertragung des Spannantriebes über das Kegelradgetriebe 37,45 ist die Drehantriebs-Hohlwelle 40 gegenüber dem Gehäuse 1 blockiert, und zwar über die Blockiereinrichtung 31 und das zwischen dieser und der Drehantriebs-Hohlwelle 40 wirksame Kegelradgetriebe 36,38. In der Arbeitsstation der Antriebseinheit ist die Spannantriebs-Einführungswelle 30 ohne Verbindung mit einem Drehmomentantrieb. Der Drehantrieb wird über die am stirnseitigen Ende 51 der Einführungshohlwelle 29 angeordnete Kupplungsklaue eingeführt. Mit der Einrastbewegung der dort beispielsweise angeordneten Klauenkupplung wird die Blockiereinrichtung 31 gelöst, indem das Kupplungsglied 33 außer Eingriff mit dem Gehäusetubus 32 gelangt, und zwar gegen den Druck der Feder 34. Das Antriebsdrehmoment wird über die Einführungshohlwelle 29, das Kegelrad 38 und die Keilnutverbindung 44 auf die Antriebshohlwelle 40 übertragen, die über die nicht dargestellte, jedoch analog Fig. 1 wirksame Spannzange 9 in drehfester Verbindung mit dem Werkzeugkopf bzw. dem Rundlaufwerkzeug (nicht dargestellt) steht. Sämtliche Einrichtungen der Spanneinrichtung laufen also wie beim Ausführungsbeispiel gemäß Fig. 1 während des Drehantriebes des Werkzeuges synchron mit.

Bezugszeichenliste

1 = Gehäuse
2 = Drehantriebswelle
3 = Spanneinrichtung
4 = Drehachse
5 = Zugstange
6 = Stift
7 = Durchgangs-Längsnut
8 = Kopf
9 = Spannzange
10 = Axialrichtung
11 = Rückseite
12 = Innenwand
13 = Blockiereinrichtung
14 = Kupplungsglied
15 = Druckfeder
16 = Pfeilrichtung
17 = Vorderseite
18 = Innenkonusring
19 = rückseitige Stirnseite
20 = Spannantriebswelle
21 = stirnseitiges Ende
22 = Gewindehülse
23 = Außengewinde
24 = rückseitiges Ende Zugstange
25 = Stift
26 = radiale Durchtrittsbohrung
27 = Seite
28 = Drehachse der Antriebswelle
29 = Einführungshohlwelle
30 = Spannantriebseinführungswelle
31 = Blockiereinrichtung
32 = Gehäusetubus
33 = Kupplungsglied
34 = Feder
35 = Innenkonusring
36 = Kegelrad
37 = Kegelrad
38 = Kegelrad
39 = Drehantriebswelle
40 = Hohlwelle
41 = Hohlwellenvorderteil
42 = Hohlwellenrückteil
43 = Verbindungsschraube
44 = Keilnutverbindung
45 = Kegelrad
46 = Gewindehülse
47 = Planetenrad
48 = Achsstummel
49 = Achsstummel
50 = stirnseitiges Ende
51 = stirnseitiges Ende
52 = Verlängerung

## Patentansprüche

1. Antriebseinheit für Rundlaufwerkzeuge
   – mit einer in ihrem Gehäuse (1) gelagerten, in ihrer Arbeitsstellung an einen Drehantrieb ankuppelbaren Drehantriebswelle (2, 39) und
   – mit einer innerhalb der dazu als Hohlwelle ausgebildeten Drehantriebswelle (2, 39) gelagerten, in Ladestellung der Antriebseinheit an einen Spannantrieb ankuppelbaren Spanneinrichtung zur Erzeugung einer axialen Spannbewegung für das Werkzeug,
   – wobei die Spanneinrichtung werkzeugseitig eine undrehbar in der Drehantriebswelle (2, 39) geführte Zugstange (5) und antriebsseitig eine über ein Schraubengetriebe die Zugstange (5) antreibende Spannantriebswelle (20) enthält,

gekennzeichnet durch eine Blockiereinrichtung (13, 31) zwischen Antriebswelle (2, 39) und Gehäuse (1), die nur in Arbeitsstellung der Arbeitseinheit bei angekuppeltem Drehantrieb die Drehbeweglichkeit der Antriebswelle (2, 39) gegenüber dem Gehäuse freigibt.

2. Antriebseinheit nach Anspruch 1, dadurch gekennzeichnet, daß die Blockiereinrichtung (13, 31) ein auf dem Umfang der Antriebswelle (2, 29) axial verschiebbares Kupplungsglied (14, 33) enthält, welches unter Federbelastung (15, 34) in Eingriffsstellung mit dem Gehäuse (1) steht und durch eine den Eingriff des Drehantriebes an der Antriebswelle (2, 29) bewirkende Axialbewegung aus der Eingriffsstellung herausgeschoben wird.

3. Antriebseinheit nach Anspruch 2, dadurch gekennzeichnet, daß die Entkupplungsbewegung des Kupplungsgliedes (14 bzw. 33) und die Ankupplungsbewegung des Drehantriebes gleichgerichtet sind.

4. Antriebseinheit nach Anspruch 1, dadurch gekennzeichnet, daß die Zugstange (5) auf ihrem Umfang ein Schraubgewinde (23) trägt, auf welches eine innerhalb der Drehantriebswelle (2) axial unverschiebbar gelagerte Gewindehülse (22) aufgeschraubt ist.

5. Antriebseinheit nach Anspruch 4, gekennzeichnet durch eine Selbsthemmung des Schraubgewindes zwischen Gewindehülse (22) und Zugstange (5).

6. Antriebseinheit nach einem oder mehreren der vorhergehenden Ansprüche, dadurch gekennzeichnet, daß die Gewindehülse (22) über das antriebsseitige Ende (24) der Zugstange (5) hinaussteht und in ihrem Überstehbereich mit der im antriebsseitigen Ende der Drehantriebswelle (2) gelagerten Spannantriebswelle (20) verbunden ist, deren rückseitiges Ende (21) als Kupplungsende von der Rückseite (11) der Drehantriebswelle (2) her zugänglich ist.

7. Antriebseinheit nach Anspruch 6, dadurch gekennzeichnet, daß die Spannantriebswelle (20) in das rückseitig aufgeschobene Ende der Gewindehülse (22) hineinragt und mit dieser radial verstiftet ist.

8. Antriebseinheit nach Anspruch 7, gekennzeichnet durch eine in die Antriebswelle (2) eingebrachte radiale Durchtrittsbohrung zur Einführung des Verbindungsstiftes (25).

9. Antriebseinheit nach einem oder mehreren der vorhergehenden Ansprüche, dadurch gekennzeichnet, daß der Dreh- und der Spannantrieb als rotatorische Antriebe konzentrisch mit einer Achsrichtung (28) eingeführt sind, die in einem insbesondere rechten Winkel zur Rotations- und Spannachse (4) des Werkzeuges steht, und über jeweils ein Kegelradgetriebe zwischen einerseits der Einführungshohlwelle (29) und der Drehantriebswelle (39,40) und andererseits der Spannantriebs-Einführungswelle (29) und der Gewindehülse (46) übertragen werden.

10. Antriebseinheit nach Anspruch 9, dadurch gekennzeichnet,
- daß das mit der Gewindehülse (46) koaxiale Kegelrad (45) für den Spannantrieb als Hohlrad eines Planetengetriebes ausgebildet ist,
- daß die Antriebshohlwelle (40) zweiteilig ausgebildet ist und die radiale Teilfuge zwischen ihren Teilen in der Rotationsebene des Kegelrades (45) für den Antrieb der Gewindehülse (46) liegt,
- daß die Gewindehülse (46) als Sonnenrad eines Planetengetriebes ausgebildet ist und
- daß in der Radialebene der Teilfuge zwischen Hohlwellenvorder- und -rückteil (41 bzw. 42) die als Drehmomentübertragungsglieder zwischen Hohlrad (45) und Sonnenrad wirksamen Planetenräder (47) angeordnet sind.

11. Antriebseinheit nach Anspruch 10, dadurch gekennzeichnet, daß die Planetenräder mit beidendig angeordneten Achsstummeln (48,49) einerseits im Hohlwellenvorderteil (41) und andererseits im Hohlwellenrückteil (42) gelagert sind und daß Hohlwellenvorderteil und -rückteil (41 bzw. 42) axial miteinander verspannt sind.

12. Antriebseinheit nach einem der Ansprüche 9 bis 11, dadurch gekennzeichnet, daß die Blockiereinrichtung (31) zwischen der Einführungshohlwelle (29) und dem diese umgebenden Teil (32) des Gehäuses (1) wirksam ist.

13. Antriebseinheit nach einem oder mehreren der vorhergehenden Ansprüche, dadurch gekennzeichnet, daß das Kegelrad (45) für den Antrieb der Gewindehülse (46) innerhalb des Kegelrades (38) für den Drehantrieb gelagert ist.

**Claims**

1. A drive unit for rotary tools
- with a rotary drive shaft (2, 39) mounted in its casing (1) and capable of being coupled in its operating position to a rotary drive and
- with a chuck device mounted within the rotary drive shaft (2, 39) designed for this purpose as a hollow shaft, which chuck device can, in the loading position of the drive unit, be connected to a chuck drive for producing an axial chucking movement for the tool,
- the chuck device containing on the side of the tool, a draw rod (5) fixedly carried in the rotary drive shaft (2, 39) and on the drive side, a chuck driving shaft (20) driving the draw rod (5) via a screw drive, characterized by a locking device (13, 31) between the drive shaft (2, 39) and the casing (1) which only releases the rotational movement of the rotary drive shaft (2, 39) in relation to the casing in the operating position of the operating unit when the rotary drive is connected.

2. A drive unit according to claim 1, characterized in that the locking device (13, 31) comprises a coupling member (14, 33) axially displaceable on the circumference of the drive shaft (2, 29) which coupling member is disposed under spring loading (15, 34) in an engaged position with the casing (1) and which is displaced from the engaged position by an axial movement producing the engagement of the rotary drive on the drive shaft (2, 29).

3. A drive unit according to claim 2, characterized in that the uncoupling movement of the coupling member (14 or 33) and the coupling movement of the rotary drive are unidirectional.

4. A drive unit according to claim 1, characterized in that the draw rod (5) carries a screw thread (23) on its circumference, whereon there is screwed a threaded sleeve (22) which is mounted inside the rotary drive shaft (2) secured against axial displacement.

5. A drive unit according to claim 4, characterized by a self-holding action of the screw thread between the threaded sleeve (22) and the draw rod (5).

6. A drive unit according to one or several of the preceding claims, characterized in that the threaded sleeve (22) extends beyond the end (24) on the drive side of the draw rod (5), and is connected in its projecting zone to the chuck drive shaft (20) mounted in the end on the drive side of the rotary drive shaft (2), the rear end (21) of said chuck drive shaft being accessible from the rear (11) of the rotary drive shaft (2) as the coupling end.

7. A drive unit according to claim 6, characterized in that the chuck drive shaft (20) extends into the end of the threaded sleeve (22) pushed on from the rear, and is radially pinned thereto.

8. A drive unit according to claim 7, characterized by a radial through-bore arranged in the drive shaft (2) for the insertion of the connecting pin (25).

9. A drive unit according to one or several of the preceding claims, characterized in that the rotary and the chuck drives are introduced as rotary drives concentrically with an axial direction (28) situated at an angle, at right angles in particular, to the axes (4) of rotation and chucking of the tool, and that they are transmitted via one bevel gear drive each between, on the one hand, the hollow input shaft (29) and the rotary drive shaft (39, 40) and, on the other hand, the input shaft (29) for the chuck drive and the threaded sleeve (46).

10. A drive unit according to claim 9, characterized in that
– the bevel gear (45) coaxial with the threaded sleeve (46) for the chuck drive, is designed as an annular wheel of a planetary gear system,
– that the hollow drive shaft (40) is designed in two parts and that the radial joint between its parts lies in the plane of rotation of the bevel gear (45) for the drive of the threaded sleeve (46),
– the threaded sleeve (46) is designed as the sun gear of a planetary gear system and
– that the planet gears (47) acting as torque transmission elements between the annular gear (45) and the sun gear are arranged in the radial plane of the joint between the front and rear parts (41 or 42) of the hollow shaft.

11. A drive unit according to claim 10, characterized in that the planetary gears are mounted by means of journals (48, 49) arranged at both ends, on the one hand, in the front section (41) of the hollow shaft and on the other hand, in the rear section (42) of the hollow shaft, and that the front and rear sections (41 and 42) of the hollow shaft are axially braced together.

12. A drive unit according to one of claims 9 to 11, characterized in that the locking device (31) is acting between the hollow input shaft (29) and the part (32) of the casing (1) surrounding this shaft.

13. A drive unit according to one or several of the preceding claims, characterized in that the bevel gear (45) for driving the threaded sleeve (46) is mounted inside the bevel gear (38) for the rotary drive.

**Revendications**

1. Unité d'entraînement pour outils rotatifs
– comprenant un arbre d'entraînement en rotation (2, 39) monté rotatif dans le corps (1) de l'unité et accouplable à sa position de travail à une commande rotative et
– comprenant un dispositif de serrage, destiné à produire un mouvement de serrage axial pour l'outil, dispositif qui est monté rotatif dans l'arbre d'entraînement en rotation (2, 39), réalisé dans ce but comme un arbre creux, et accouplable à une commande de serrage dans une position de chargement de l'unité d'entraînement,
– le dispositif de serrage contenant, côté outil, une tige de traction (5) guidée sans pouvoir tourner dans l'arbre d'entraînement en rotation (2, 39) et, côté commande, un arbre de commande de serrage (20) qui commande la tige de traction (5) par l'intermédiaire d'un mécanisme à vis,
caractérisé par un dispositif de blocage (13, 31) prévu entre l'arbre d'entraînement en rotation (2, 39) et le corps (1) et qui débloque seulement la mobilité en rotation de cet arbre (2, 39), par rapport au corps, à la position de travail de l'unité d'entraînement, alors que la commande rotative est accouplée.

2. Unité selon la revendication 1, caractérisée en ce que le dispositif de blocage (13, 31) comporte un organe d'accouplement (14, 33) disposé axialement coulissant sur la périphérie de l'arbre d'entraînement (2, 29), organe qui est maintenu par ressort (15, 34) en position de prise avec le corps (1) et est poussé hors de cette position de prise par un mouvement axial produisant l'accouplement de la commande rotative à l'arbre d'entraînement (2, 29).

3. Unité selon la revendication 2, caractérisée en ce que le mouvement de désaccouplement de l'organe d'accouplement (14 ou 33) et le mouvement d'accouplement de la commande rotative s'effectuent dans le même sens.

4. Unité selon la revendication 1, caractérisée en ce que la tige de traction (5) porte sur sa périphérie un filetage (23) sur lequel est vissé un manchon fileté (22) monté axialement immobile à l'intérieur de l'arbre d'entraînement en rotation (2).

5. Unité selon la revendication 4, caractérisée en ce que la liaison vissée entre le manchon fileté (22) et la tige de traction (5) est autobloquante.

6. Unité selon une ou plusieurs des revendications précédentes, caractérisée en ce que le manchon fileté (22) dépasse de l'extrémité (24) côté commande de la tige de traction (5) et est relié dans sa portion saillante à l'arbre de commande de serrage (20) monté rotatif dans l'extrémité côté commande de l'arbre d'entraînement en rotation (2), l'extrémité arrière (21) de l'arbre de commande de serrage (20), servant d'extrémité d'accouplement, étant accessible depuis le côté arrière (11) de l'arbre d'entraînement en rotation (2).

7. Unité selon la revendication 6, caractérisée en ce que l'arbre de commande de serrage (20) pénètre dans l'extrémité arrière, non filetée, du manchon (22) et est goupillé radialement à cette extrémité.

8. Unité selon la revendication 7, caractérisée en ce que l'arbre d'entraînement (2) présente un perçage radial traversant pour l'introduction de la goupille (25) d'assemblage.

9. Unité selon une ou plusieurs des revendications précédentes, caractérisée en ce que la commande rotative et la commande de serrage, constituées par des commandes d'entraînement en rotation, sont accouplables concentriquement suivant un axe (28) faisant en particulier un angle droit avec l'axe de rotation et de serrage (4) de l'outil et que les mouvements rotatifs de ces commandes sont transmis chacun par un engrenage conique, d'une part, entre un arbre creux d'entrée (29) et l'arbre d'entraînement en rotation (39, 40) et, d'autre part, entre un arbre d'entrée (30) pour le serrage et le manchon fileté (46).

10. Unité selon la revendication 9, caractérisée en ce que

    – que la roue conique (45) coaxiale au manchon fileté (46) pour la commande de serrage est réalisée comme la couronne d'un train planétaire,

    – que l'arbre creux d'entraînement (40) est réalisé en deux parties et le joint radial d'assemblage entre ses parties est situé dans le plan de rotation de la roue conique (45) pour la commande du manchon fileté (46),

    – que le manchon fileté (46) est réalisé comme la roue solaire d'un train planétaire et

    – que les satellites (47), agissant en tant qu'organes de transmission du couple entre la couronne (45) et la roue solaire, sont disposés dans le plan radial défini par le joint d'assemblage entre la partie avant (41) et la partie arrière (42) de l'arbre creux.

11. Unité selon la revendication 10, caractérisée en ce que les satellites sont montés rotatifs, par des tourillons (48, 49) prévus aux deux extrémités, d'une part, dans la partie avant (41) de l'arbre creux et, d'autre part, dans la partie arrière (42) de l'arbre creux, et que la partie avant (41) et la partie arrière (42) de cet arbre sont serrées axialement ensemble.

12. Unité selon une des revendications 9 à 11, caractérisée en ce que le dispositif de blocage (31) agit entre l'arbre creux d'entrée (29) et la partie (32) du corps (1) entourant cet arbre.

13. Unité selon une ou plusieurs des revendications précédentes, caractérisée en ce que la roue conique (45) pour la commande du manchon fileté (46) est montée rotative à l'intérieur de la roue conique (38) pour l'entraînement en rotation.

FIG.1

FIG.2